# EUROPÄISCHE PATENTANMELDUNG

(11) **EP 4 852 277 A1**
(43) Veröffentlichungstag der Anmeldung: **09.12.2026**
(21) Anmeldenummer: 26182381.9
(22) Anmeldetag: 01.06.2026
(51) Int. Cl.: H02J 9/04, H02J 15/50

(54) **SYSTEM ZUR VERSORGUNG VON VERBRAUCHERN MIT ELEKTRISCHER ENERGIE**

(30) Priorität: 03.06.2025 DE 102025001894
(71) Anmelder: TERM ZERO GmbH, 60389 Frankfurt (DE)
(72) Erfinder: EMDE, Thomas, 60389 Frankfurt am Main (DE)
(74) Vertreter: Patentanwälte Olbricht Buchhold Keulertz

(57) **Zusammenfassung**

Die vorliegende Erfindung betrifft ein System (100) zur Versorgung von Verbrauchern mit elektrischer Energie sowie gegebenenfalls weiteren Medien umfassend:
-wenigstens eine Erzeugungseinrichtung (10, 11) zur Erzeugung regenerativer elektrischer Energie,
-ein vom öffentlichen Netz autarkes Stromnetz, in welches diese regenerativ erzeugte Energie eingespeist wird
-wenigstens eine Speichereinrichtung (40) zur Speicherung eingespeister regenerativ erzeugter elektrischer Energie,
-wenigstens eine Abgabeeinrichtung (60) zur Abgabe der regenerativ erzeugten elektrischen Energie aus der Einrichtung an einen externen Verbraucher,
-wenigstens eine Kommunikationseinrichtung zur drahtlosen Kommunikation, geeignet zum Empfangen und/ oder Senden von Signalen,
-wenigstens eine Steuereinheit (80), die mit der Kommunikationseinrichtung zusammenwirkt, wobei die Steuereinheit (80) geeignet ist, bei Anforderung von elektrischer Energie durch einen Verbraucher auf die Abgabeeinrichtung (60) und/oder die Speichereinrichtung (40) einzuwirken, um eine Abgabe von elektrischer Energie an den Verbraucher zu veranlassen,
-wobei das System (100) weiterhin wenigstens eine Drohne (120) umfasst, geeignet, auf Anforderung eines Verbrauchers hin mindestens ein von diesem Verbraucher benötigtes Objekt (121) zu einem vorgegebenen Standort zu transportieren.

## Beschreibung

Die vorliegende Erfindung betrifft ein System zur Versorgung von Verbrauchern mit elektrischer Energie sowie gegebenenfalls weiteren Medien umfassend:
- wenigstens eine Erzeugungseinrichtung zur Erzeugung regenerativer elektrischer Energie,
- ein vom öffentlichen Netz autarkes Stromnetz, in welches diese regenerativ erzeugte Energie eingespeist wird,
- wenigstens eine Speichereinrichtung zur Speicherung eingespeister regenerativ erzeugter elektrischer Energie,
- wenigstens eine Abgabeeinrichtung zur Abgabe der regenerativ erzeugten elektrischen Energie aus der Einrichtung an einen externen Verbraucher,
- wenigstens eine Kommunikationseinrichtung zur drahtlosen Kommunikation, geeignet zum Empfangen und/ oder Senden von Signalen,
- wenigstens eine Steuereinheit, die mit der Kommunikationseinrichtung zusammenwirkt, wobei die Steuereinheit geeignet ist, bei Anforderung von elektrischer Energie durch einen Verbraucher auf die Abgabeeinrichtung und/oder die Speichereinrichtung einzuwirken, um eine Abgabe von elektrischer Energie an den Verbraucher zu veranlassen.

Aus der WO 2025/078680 A1 ist ein System zur Erzeugung, Abgabe und Speicherung elektrischer Energie bekannt. Das bekannte System umfasst als ein Kernelement ein autarkes Stromnetz, welches vom öffentlichen Stromnetz unabhängig ist. Mit Hilfe von Windturbinen und Photovoltaikanlagen wird zunächst regenerative elektrische Energie erzeugt. in das autarke Stromnetz eingespeist und an Ladestationen geleitet, an denen elektrisch angetriebene Fahrzeuge oder mit Wasserstoff angetriebene Fahrzeuge aufgeladen bzw. betankt werden können. Weiterhin sind in dem System Stromspeichereinrichtungen vorgesehen, um im System erzeugte überschüssige regenerativ erzeugte elektrische Energie zu speichern. Im System erzeugte regenerative elektrische Energie kann auch elektrolytisch in Wasserstoff umgewandelt werden und dieser Wasserstoff kann dann beispielsweise in einem Wasserstofftank gespeichert werden.

Computersysteme von Industrieunternehmen oder öffentlichen Einrichtungen werden immer häufiger von Computerhackern oder Saboteuren angegriffen. Besonders problematisch sind derartige Angriffe, die in Zeiten internationaler Konflikte auch in verstärktem Umfang von ausländischen Geheimdiensten verübt werden, wenn sie sich gegen systemrelevante Einrichtungen der öffentlichen Infrastruktur richten, beispielsweise solche von Polizei, Feuerwehr, Militär, Krankenhäusern, Rundfunk- und Fernsehsendern, der Regierung oder öffentlichen Verwaltung, Kraftwerken, Umspannwerken, Rechenzentren, Verkehrssystemen, insbesondere Stellwerken im Schienenverkehr oder dergleichen. Die Computersysteme dieser Einrichtungen sind durchweg über das Internet mit einem öffentlich zugänglichen Netzwerk verbunden und sie sind für die elektrische Versorgung an das öffentliche Stromnetz angeschlossen. Durch diese Schnittstellen sind empfindliche Einfallstore vorhanden, die selbst bei Vorhandensein von Sicherheitsvorkehrungen wie Firewalls oder dergleichen, einem Hacker oder Saboteur eine Möglichkeit bieten, in das Computersystem der öffentlichen Einrichtung oder des Unternehmens einzudringen und dabei erheblichen Schaden anzurichten.

Ein wesentliches Problem ergibt sich daraus, dass die Saboteure auf diese Weise auch die Stromversorgung von Unternehmen und systemrelevanten Einrichtungen unterbrechen können oder gar das gesamte Stromnetz zum Erliegen bringen können. In Ländern wie Spanien, Frankreich und auch in England ist es erst kürzlich zu einem solchen teilweisen oder gar vollständigen Zusammenbruch des öffentlichen Stromnetztes gekommen. Ein solcher Sabotageakt hat enorme Auswirkungen auf das öffentliche Leben und führt zum Katastrophenzustand. Auch ein Hackerangriff auf die Datensysteme öffentlicher und privater Einrichtungen, die im Zusammenhang mit der Stromversorgung stehen, wie beispielsweise Kraftwerke, Umspannwerke, Transformatoren und andere Unternehmensbereiche von Energieversorgern kann zu einem direkten Stromausfall führen.

Vorhandene Notstromsysteme in den einzelnen Einrichtungen wie Krankenhäusern oder dergleichen sind in der Regel nur mit einer begrenzten Kapazität ausgelegt und können daher einen Netzausfall nur für eine begrenzte Zeitdauer kompensieren.

Es besteht daher ein erheblicher Bedarf an einer ausreichenden und netzunabhängigen Energieversorgung für derartige Stromausfälle, die im Notfall kurzfristig zur Verfügung steht. Weiterhin ist ein Anliegen, Bereiche von öffentlichen Einrichtungen der genannten Art sowie Unternehmen bei Angriffen auf deren Computersysteme und Datenspeicher in geeigneter Form zu schützen. In der DE 200 22 077 U1 wird ein Container beschrieben, bei dem es sich um eine Art Baucontainer handelt, der in einem fest eingebauten Einbauschrank eine Datenerarbeitungseinheit enthält. Bei diesem bekannten Container geht es darum, hochwertige Datenverarbeitungs- und Telekommunikationskomponenten, die der Container enthält, gegen Diebstahl zu schützen. Für diesen Diebstahlschutz sind Alarmvorrichtungen vorhanden. Der bekannte Container ist jedoch nicht dazu vorgesehen, externen Verbrauchern Rechenkapazität oder Speicherkapazität in einer Notfallsituation, beispielsweise bei einem Ausfall des öffentlichen Stromnetzes, zur Verfügung zu stellen. Vielmehr wird der Container über einen herkömmlichen Stromanschluss mit Netzstrom versorgt. Eine zur Verfügung Stellung weiterer Medien, wie beispielsweise Wasserstoff, Wasser oder Kraftstoffen an Verbraucher über den Container ist ebenfalls nicht vorgesehen.

Die DE 10 2023 124 449 A1 beschreibt ein System mit einem Rechenzentrum, wobei die Grundidee darin besteht, dieses hinsichtlich der Stromversorgung autark zu betreiben, so dass bei einem Stromausfall sofort Notstrom zur Verfügung steht. Dazu ist eine lokale Energieerzeugungsanlage in Form eines geschlossenen, vom öffentlichen Stromnetz unabhängigen Inselnetzes vorgesehen. Das bekannte System umfasst weiterhin eine Speichereinrichtung, die ausreicht, das Rechenzentrum einige Tage mit elektrischer Leistung zu versorgen. Es wird vorgeschlagen, die hohe, für das Rechenzentrum benötigte, elektrische Leistung ausschließlich aus regenerativen Quellen zur Verfügung zu stellen.

Aus der DE 20 2019 DE 20 2019 105 359 U1 ist eine Vorrichtung zum Betanken von batteriegetriebenen Fahrzeugen mit elektrischer Energie bekannt. Beschrieben wird im Prinzip eine dezentrale Energietankstelle, bei der die Energie, die zum Betanken der batteriebetriebenen Fahrzeuge benötigt wird, zumindest teilweise selbst erzeugt wird. Die Vorrichtung weist einen mobilen Energiecontainer auf. Zur Stromerzeugung wird primär ein Aggregat verwendet, welches einen Generator umfasst, der mit Diesel betrieben wird. Allerdings kann auf dem Dach des Energiecontainers eine Photovoltaikanlage installiert sein oder es ist eine Windkraftanlage vorhanden, so dass kleinere Mengen an elektrischer Energie auch regenerativ erzeugt werden können. Weiterhin wird eine Kommunikationseinrichtung beschrieben, so dass die Vorrichtung über Funk kommunizieren kann. Als Energiespeichereinrichtung können Akkumulatoren dienen.

Die Aufgabe der vorliegenden Erfindung besteht darin, ein System der eingangs genannten Art zur Versorgung von Verbrauchern mit elektrischer Energie sowie gegebenenfalls weiteren Medien zur Verfügung zu stellen, welches vom öffentlichen Stromnetz unabhängig ist, gegen Eingriffe von außen durch Unbefugte geschützt ist, bei einem Notfall im öffentlichen Stromnetz in ausreichendem Umfang auch für eine längere Zeitdauer elektrische Energie bereitstellen kann und über weitere, insbesondere in Notfallsituationen nützliche Funktionen verfügt.

Die Lösung der vorgenannten Aufgabe liefert ein erfindungsgemäßes System zur Versorgung von Verbrauchern mit elektrischer Energie sowie gegebenenfalls weiteren Medien umfassend:
- wenigstens eine Erzeugungseinrichtung zur Erzeugung regenerativer elektrischer Energie,
- ein vom öffentlichen Netz autarkes Stromnetz, in welches diese regenerativ erzeugte Energie eingespeist wird,
- wenigstens eine Speichereinrichtung zur Speicherung eingespeister regenerativ erzeugter elektrischer Energie,
- wenigstens eine Abgabeeinrichtung zur Abgabe der regenerativ erzeugten elektrischen Energie aus der Einrichtung an einen externen Verbraucher,
- wenigstens eine Kommunikationseinrichtung zur drahtlosen Kommunikation, geeignet zum Empfangen und/ oder Senden von Signalen,
- wenigstens eine Steuereinheit, die mit der Kommunikationseinrichtung zusammenwirkt, wobei die Steuereinheit geeignet ist, bei Anforderung von elektrischer Energie durch einen Verbraucher auf die Abgabeeinrichtung und/oder die Speichereinrichtung einzuwirken, um eine Abgabe von elektrischer Energie an den Verbraucher zu veranlassen,
- wobei das System weiterhin wenigstens eine Drohne umfasst, geeignet, auf Anforderung eines Verbrauchers hin mindestens ein von diesem Verbraucher benötigtes Objekt zu einem vorgegebenen Standort zu transportieren.

Die erfindungsgemäße Lösung fußt auf der Überlegung, dass in Notfallsituationen neben elektrischer Energie, energiehaltigen Medien wie Treibstoffen, Gasen, Wasser etc. häufig auch Objekte benötigt werden, an denen Mangel herrscht und die in kurzer Zeit herangeschafft werden müssen. Als ein Beispiel seien Objekte aus dem Bereich des Gesundheitswesens genannt, wie zum Beispiel Medikamente, Blutkonserven oder medizinische Geräte. Hier ist es sehr vorteilhaft, dass das System über wenigstens eine Drohne, vorzugsweise eine Vielzahl von Drohnen verfügt, die eingerichtet sind, diese Objekte zu transportieren. Die Drohnen können diese Objekte sehr rasch heranschaffen, sie sind von den üblichen Verkehrswegen wie Straßen oder Schienen unabhängig und bewegen sich im dreidimensionalen Raum. Im Vergleich zu Flugzeugen oder Hubschraubern sind Drohnen sehr kostengünstig und wenig störanfällig und können daher in großer Anzahl im erfindungsgemäßen System zur Verfügung stehen. Die Drohnen sind leicht zu steuern, so dass hier kein besonders qualifiziertes Personal wie etwa ausgebildete Piloten benötigt werden. Außerdem unterliegen Drohnen nicht den komplexen Vorschriften der Überwachung des Luftverkehrssystems. Zudem haben sie den weiteren Vorteil, dass sie vergleichsweise klein sind, sich in einem Verteidigungsfall unabhängig bewegen können und weniger anfällig für feindliche Angriffe sind. Zudem lassen sich Drohnen gegebenenfalls auch unabhängig von den im Luftverkehr üblichen System wie beispielsweise der Satellitenüberwachung steuern.

Auch flugtechnisch weisen Drohnen Vorteile auf gegenüber anderen Luftfahrzeugen, da sie beispielsweise auf der Stelle stehen, sich im Gleitflug bewegen und in geringeren Flughöhen fliegen können. Die Drohnen können erfindungsgemäß nicht nur zum Transportieren von Objekten, sondern beispielsweise auch zur Aufklärung eingesetzt werden.

Über wenigstens eine Erzeugungseinrichtung des erfindungsgemäßen Systems, beispielsweise eine oder mehrere Windkraftanlagen, eine oder mehrere Photovoltaikanlagen oder gegebenenfalls auch über Wasserkraft kann regenerative elektrische Energie kostengünstig erzeugt und den dezentralen Abgabe- und Speichereinrichtungen des Systems zur Verfügung gestellt werden. Das systemeigene autarke Stromnetz kann die so erzeugte regenerative elektrische Energie aufnehmen und dorthin leiten, wo Bedarf an elektrischer Energie besteht. Da das Stromnetz autark und ohne Verbindung zum öffentlichen Stromnetz ist, ist die Funktion gegen etwaige Angriffe durch Hacker oder Saboteure geschützt und auch bei einem vollständigen Zusammenbruch des öffentlichen Stromnetzes ist die weitere Funktion des autarken Stromnetzes weiterhin sichergestellt.

Das System umfasst in der Regel eine Mehrzahl, d. h. eine ausreichende Anzahl von Abgabeeinrichtungen, die an verschiedenen Orten angeordnet sein können und geeignet sind, regenerativ erzeugte elektrische Energie aus dem autarken Stromnetz des Systems in geeigneter Form (Stromstärke, Spannung, Frequenz etc.) an Verbraucher abzugeben. Diese Abgabeeinrichtungen können als eine Art "Energieinseln" angesehen werden, an denen Verbraucher elektrische Energie, aber gegebenenfalls auch andere Medien, die in einer Notfallsituation benötigt werden, erhalten werden können.

Das System verfügt über wenigstens eine Speichereinrichtung zur Speicherung der regenerativ erzeugten elektrischen Energie. Die vorgenannten "Energieinseln" umfassen in der Regel eine oder mehrere solcher Speichereinrichtungen. Es kommen verschiedene Speichereinrichtungen in Betracht, in denen die Energie auf unterschiedliche Weise und in unterschiedlicher Form gespeichert ist. Dies können beispielsweise Batterien oder Akkumulatoren, Tanks mit Wasserstoff oder anderen gasförmigen oder flüssigen Energieträgern oder gegebenenfalls Wasserspeicher sein, die das Wasser an einem erhöhten Standort speichern und somit potentielle Energie speichern.

Die Kapazitäten des Systems zur Erzeugung regenerativer elektrischer Energie und die Kapazitäten zu deren Speicherung sind so ausgelegt und berechnet, dass in einer Notfallsituation eine ausreichende Versorgung aller systemrelevanter Einrichtungen mit netzunabhängiger regenerativer Energie über einen ausreichenden Zeitraum unter Berücksichtigung einer gewissen Redundanz gewährleistet ist. Dies bedeutet, bei einem Stromausfall und auch bei einem vollständigen Zusammenbruch des öffentlichen Stromnetzes steht für alle wichtigen Einrichtungen elektrische Energie aus dem autarken Stromnetz ohne die Notwendigkeit von Einschränkungen zur Verfügung.

Vorteilhaft ist, dass das System den Verbrauchern im Bereich der "Energieinseln" nicht nur elektrische Energie aus regenerativen Quellen liefert, sondern auch weitere, in Notfallsituationen, bei einer Katastrophenlage oder im Verteidigungsfall nützliche Funktionen zur Verfügung stellt. Beispielsweise können bei einem Stromausfall den Verbrauchern, insbesondere systemrelevanten Einrichtungen auch Rechnerkapazität und/oder Datenspeicherkapazität sowie gegebenenfalls weitere Medien wie zum Beispiel Wasserstoff, energiehaltige Gase, Wasser oder energiehaltige Flüssigkeiten wie Methanol, Treibstoffe, Kerosin oder dergleichen zur Verfügung gestellt werden. Ein vom öffentlichen Stromnetz unabhängiges, dezentrales Rechenzentrum des erfindungsgemäßen Systems, beispielsweise im Bereich einer der "Energieinseln", kann insbesondere einerseits die Aufgabe der Berechnung und Verteilung der im autarken Stromnetz erzeugten und gespeicherten, regenerativ erzeugten elektrischen Energie übernehmen sowie sämtliche damit verbundenen Steuervorgänge für die Versorgung der systemrelevanten Einrichtungen mit elektrischer Energie durchführen. Weiterhin dient wenigstens ein Rechenzentrum dazu, Rechnerkapazität für die Einrichtungen (Verbraucher) zur Verfügung zu stellen, deren Computersysteme sei es durch einen Stromausfall, sei es aus anderen Gründen beispielsweise durch einen Hackerangriff, Sabotage, einen militärischen Angriff oder eine Naturkatastrophe ausgefallen, funktionsunfähig oder von Viren befallen sind.

Gemäß einer bevorzugten Weiterbildung der vorliegenden Erfindung umfasst das System zwei oder mehrere dezentrale Rechenzentren an verschiedenen Orten, welche gegebenenfalls elektrisch und/oder über Kommunikationseinrichtungen miteinander verbunden sind. Diese dezentralen Rechenzentren sind zwar gegebenenfalls untereinander verbunden, aber sie sind nicht mit dem öffentlichen Stromnetz oder mit dem Internet verbunden, so dass sie gegen Fernangriffe von Hackern oder Saboteuren geschützt sind. Das Vorsehen von zwei oder mehreren Rechenzentren hat den Vorteil, dass diese mit kürzeren Anfahrwegen erreichbar sind und in dem Fall, dass eines der Rechenzentren von einem potentiellen Angreifer lokalisiert und angegriffen werden sollte, weitere Rechenzentren an anderen Orten zur Verfügung stehen. Dadurch, dass die Rechenzentren miteinander kommunizieren können, kann bei dem Versuch eines Angriffs aus Sicherheitsgründen eine Abschaltung des einen Rechenzentrums erfolgen und dessen Aufgaben beispielsweise im Bereich der Steuerung der Energieabgaben aus dem System von einem anderen Rechenzentrum übernommen werden. Außerdem wird bei mehreren Rechenzentren deren Leistung und Rechenkapazität insgesamt erhöht.

Gemäß einer bevorzugten Weiterbildung der vorliegenden Erfindung können ein solches dezentrales Rechenzentrum und/oder Abgabeeinrichtungen zur Abgabe der regenerativ erzeugten elektrischen Energie jeweils in einem oder mehreren mobilen oder transportablen Energiecontainern untergebracht sein. Dies schafft die Möglichkeit, bei Bedarf ein Rechenzentrum oder den Speicher und die Abgabeeinrichtung für regenerativ erzeugte elektrische Energie an einen anderen Ort zu transportieren. Ein mobiler Energiecontainer kann neben der Funktion des Rechenzentrums auch über Abgabeeinrichtungen regenerativ erzeugte Energie oder ein anderes Medium an Verbraucher abgeben. Der Begriff "mobil" bedeutet, dass der Energiecontainer selbst beispielsweise über Räder und Antriebseinrichtungen verfügt und somit bei Anforderung an einen anderen Ort fahren kann. "Transportabel" bedeutet, der Energiecontainer ist nicht "selbst fahrend" ausgebildet, kann aber beispielsweise von einem Lastfahrzeug aufgenommen werden, wie ein Container oder Anhänger und kann somit ebenfalls an einen anderen Ort verbracht werden. Vorteilhaft ist, dass der mobile oder transportable Energiecontainer nicht selbst mit dem autarken Stromnetz verbunden sein muss. Vielmehr kann dieser Speichereinrichtungen für die elektrische Energie aufweisen sowie Abgabeeinrichtungen für elektrische Energie, die zuvor regenerativ erzeugt wurde und aus dem autarken Stromnetz in die Speichereinrichtungen des Energiecontainers eingespeist wurde. Somit steht einem Nutzer des Systems an dem Ort, an den der Energiecontainer verbracht wurde, regenerativ gewonnene Energie sowie gegebenenfalls Rechenkapazität oder ein anderes Medium wie zum Beispiel Wasserstoff, Treibstoff, ein energiehaltiges Gas oder Wasser zur Verfügung.

Fällt beispielsweise in einer systemrelevanten Einrichtung der oben genannten Art, zum Beispiel in einem Krankenhaus die Stromversorgung aus, weil das öffentliche Stromnetz zusammenbricht, dann kann das Krankenhaus einen der mobilen oder transportablen Energiecontainer anfordern. Wurde das Computersystem eines Krankenhauses gehackt, dann kann diesem ebenfalls ein solcher Energiecontainer zur Verfügung gestellt werden. Bei einem größeren Stromausfall reichen die in Krankenhäusern vorhandenen herkömmlichen Notstromaggregate nur für eine begrenzte Zeitdauer. Außerdem werden diese in der Regel mit Dieselkraftstoff betrieben, was nicht nachhaltig ist. Bei einem längeren Stromausfall steht zudem kein Strom mehr zur Verfügung, um das Computersystem des Krankenhauses zu versorgen. Mit einem mobilen oder transportablen Energiecontainer gemäß der Erfindung wird somit der von einem Notfall betroffenen Einrichtung sowohl elektrische Energie als auch Rechnerkapazität zur Verfügung gestellt. Das Krankenhaus wurde hier nur als Beispiel genannt für eine Einrichtung, die von einem Stromausfall in erheblichem Ausmaß betroffen ist. Gleiche Überlegungen gelten für andere systemrelevante Einrichtungen der öffentlichen Infrastruktur, beispielsweise solche von Polizei, Feuerwehr, Militär, Krankenhäusern, Rundfunk- und Fernsehsendern, der Regierung oder öffentlichen Verwaltung, Kraftwerke, Umspannwerke, Rechenzentren, Verkehrsleitsysteme, insbesondere Stellwerke im Schienenverkehr, im öffentlichen Nahverkehr, Ampelsysteme, Verkehrsleitsysteme, Logistiksysteme, aber auch für größere Unternehmen, die für die Bevölkerung von besonderer Bedeutung sind, zum Beispiel aus dem medizinischen Bereich oder EDV-Bereich oder dergleichen. Die mobilen oder transportablen Energiecontainer können auch überall dort eingesetzt werden, wo ein großer Bedarf an Energie für die Kühlung besteht, beispielsweise im Lebensmittelbereich, Blutbanken etc.

Gemäß einer Variante der Erfindung kann es auch so sein, dass nicht alle Einrichtungen in einem mobilen oder transportablen Energiecontainer untergebracht sind, sondern nur Teile davon. Alternativ können beispielsweise im Bereich einer "Energieinsel" auch die einzelnen Komponenten des Systems in mehreren solchen Energiecontainers untergebracht sein. Insbesondere wenn größere Mengen an elektrischer Energie oder anderen Medien im Bereich einer "Energieinsel" bereitzuhalten sind, bietet es sich an, die Komponenten wie Speichereinheiten, Abgabeeinrichtungen für verschiedene Medien, wie Wasser, Wasserstoff, Gase, Treibstoffe, Rechenzentren etc. in mehreren getrennten Containern unterzubringen, so dass die Komponenten des Systems bei einer notwendigen Verlagerung immer noch transportabel sind.

Beispielsweise kann man auch die Energiespeicher und Abgabeeinrichtungen für die regenerativ erzeugte Energie in einem transportablen Energiecontainer unterbringen, gemeinsam mit Rechnern und weiteren EDV-Einrichtungen, während man weitere Einheiten eines Rechenzentrums stationär unterbringt. Bei dieser Variante kann beispielsweise das Rechenzentrum zumindest teilweise im Erdreich eingelassen sein, wodurch es sich besser gegen unbefugte Eingriffe absichern und auch besser kühlen lässt. Die übrigen Einrichtungen mit Teilen des Rechenzentrums, die für den konkreten Einsatzfall ausreichen, können sich dann in dem mobilen oder transportablen Energiecontainer befinden, so dass dieser in einer Baugröße erstellt werden kann, die diejenige eines typischen genormten Containers nicht übersteigt, so dass der Energiecontainer mit verfügbaren Fahrzeugen im Straßenverkehr transportiert werden kann und keine Spezialfahrzeuge notwendig sind.

Jedoch können auch beispielsweise die wenigstens eine Abgabeeinrichtung zur Abgabe der regenerativ erzeugten elektrischen Energie aus dem autarken Stromnetz an Verbraucher, wenigstens eine Speichereinrichtung zur Speicherung der regenerativ erzeugten elektrischen Energie und wenigstens ein vom öffentlichen Netz unabhängiges, dezentrales Rechenzentrum in einer gemeinsamen modulartigen Baueinheit untergebracht. Dabei kann es sich um eine mobile oder transportable Baueinheit handeln, wie sie zuvor beschrieben wurde, aber auch um eine stationäre Baueinheit. Der Vorteil bei dieser Variante besteht darin, dass derartige modulartige Baueinheiten in standardisierten Größen zur Verfügung gestellt werden können, die eine definierte Energiemenge und eine definierte Rechenleistung zur Verfügung stellen. Mehrere dieser modulartigen Baueinheiten können dann gegebenenfalls miteinander kombiniert werden, wenn für den Anwender die Kapazität einer Baueinheit nicht ausreicht. Dies hat den Vorteil, dass im Prinzip nur eine oder wenige Modulgrößen der Baueinheiten produziert und vorgehalten werden müssen, sich dadurch aber alle Anwendungsfälle abdecken lassen, indem entsprechend dem Bedarf eine Anzahl der modulartigen Baueinheiten miteinander kombiniert werden.

Gemäß einer bevorzugten Weiterbildung der vorliegenden Erfindung umfasst das System weiterhin Erzeugungseinrichtungen zur Erzeugung von Wasserstoff mittels der regenerativ erzeugten elektrischen Energie aus dem autarken Stromnetz, Speichereinheiten zum Speichern von Wasserstoff sowie Abgabeeinrichtungen zur Abgabe von Wasserstoff an Verbraucher. Dem Anwender werden somit im Bereich einer "Energieinsel" gegebenenfalls mobile oder transportable Baueinheiten zur Verfügung gestellt, die elektrische Energie liefern, Rechenkapazität zur Verfügung stellen und gegebenenfalls EDV-Einrichtungen enthalten. Die gleichen oder andere Container oder stationäre Baueinheiten können außerdem bei Bedarf Wasserstoff liefern, welcher als weiterer Energieträger zur Verfügung steht. Der Wasserstoff kann beispielsweise in einem Tank gespeichert sein, welcher sich in einem Energiecontainer befindet und bei Bedarf zusätzlich gesichert ist.

Gemäß einer bevorzugten Weiterbildung der vorliegenden Erfindung umfasst das System wenigstens zwei modulartige Baueinheiten, welche über Stromkabel und/oder Datenkabel und/oder Funkeinrichtungen mit Sender und Empfänger und/oder eine Wasserstoffleitung miteinander verbindbar sind. Dies schafft für den Anwender die Möglichkeit, zwei oder mehrere modulartige Baueinheiten der erfindungsgemäßen Art zu erwerben und diese am gleichen Ort miteinander zu kombinieren, wenn die ursprünglich erworbene Kapazität einer Baueinheit nicht mehr ausreicht. Oder der Anwender erwirbt zwei oder mehrere modulartige Baueinheiten und platziert diese an verschiedenen Orten, wobei er diese Baueinheiten auch dann funktional miteinander kombinieren kann. Vorteilhaft ist bei dieser Variante der Erfindung auch, dass die Abgabeeinrichtungen der Energiecontainer für elektrische Energie, Wasserstoff, andere Medien oder Rechnerleistung sowie die Elemente zur Verbindung von Baueinheiten des Systems standardisiert und aufeinander abgestimmt sein können, so dass die Abgabe der Energie oder der Medien und die Kombination von Energiecontainern im System erheblich vereinfacht wird. Es ist somit in einer Notfallsituation, in der rasches Handeln geboten ist, für die Verbraucher nicht notwendig, Verbindungsleitungen, Verbindungskabel, Anschlussvorrichtungen oder Adapter zu beschaffen, um ein angefordertes Medium zu erhalten. Bei herkömmlichen Systemen ist dies keineswegs gegeben, da verschiedene Hersteller in der Regel unterschiedliche Systeme für den Zugang zu ihren Geräten verwenden, um sich gegen Wettbewerber abzugrenzen. Diese Problematik ist beispielsweise von Ladevorrichtungen für Smartphones oder Computer oder Ladesäulen für elektrisch angetriebene Kraftfahrzeuge hinlänglich bekannt.

Gemäß einer bevorzugten Weiterbildung der vorliegenden Erfindung weist das System wenigstens eine Landestelle für Flugzeuge, Hubschrauber oder Drohnen im Bereich wenigstens einer Abgabeeinrichtung zur Abgabe der regenerativ erzeugten elektrischen Energie aus dem autarken Stromnetz an Flugzeuge, Hubschrauber oder Drohnen auf. Dies schafft zum einen die Möglichkeit, diese Luftfahrzeuge mit regenerativ erzeugter elektrischer Energie aus dem erfindungsgemäßen System aufzuladen. Weiterhin besteht die Möglichkeit, einen der erfindungsgemäßen Energiecontainer in ein Flugzeug zu laden und an einen weiter entfernten Ort zu transportieren, um so in einem Notfall eine kritische Einrichtung sehr rasch zu versorgen. Insbesondere in einem Verteidigungsfall ist eine solche Landestelle für militärische Luftfahrzeuge von Vorteil.

Gemäß einer bevorzugten Weiterbildung der vorliegenden Erfindung umfasst das System wenigstens eine autarke Funkeinrichtung mit Sender sowie Empfänger, insbesondere mit einer Antenne, eingerichtet zur Nutzung durch systemrelevante Organisationen wie Polizei, Feuerwehr, Militär, technische Hilfswerke oder dergleichen. Eine solche autarke Funkeinrichtung kann entweder ortsfest untergebracht sein und auf diese Weise besonders gesichert sein, beispielsweise wenn sie unterirdisch untergebracht ist, in einem Bunker oder im Gelände besonders getarnt.

Dass die Funkeinrichtung autark ist bedeutet, dass sie nicht mit einem öffentlich zugänglichen Funknetz verbunden ist und dadurch gegen Angriffe besser gesichert ist. Beispielsweise können modulartige Baueinheiten zur Verfügung gestellt werden, die spezifisch für eine Organisation wie Polizei, Feuerwehr, Militär eingerichtet und mit dem entsprechenden Funksystem ausgestattet sind.

Gemäß einer bevorzugten Weiterbildung der vorliegenden Erfindung umfasst das System wenigstens eine Funkeinrichtung, geeignet für eine Kommunikation mit Navigationsgeräten von Landfahrzeugen, Wasserfahrzeugen, Luftverkehr, Schienenverkehr, stationären Verkehrseinrichtungen oder militärischen Einrichtungen. Derartige Funkeinrichtungen können daher Teil eines internen Kommunikationssystems sein, über das in besonders sicherer Form mit Fahrzeugen beispielsweise einer militärischen Einheit, der Polizei, Feuerwehr, eines technischen Hilfswerks oder einer medizinischen Organisation wie dem Roten Kreuz oder dergleichen kommuniziert werden kann.

Gemäß einer bevorzugten Weiterbildung der vorliegenden Erfindung umfassen die stationären Verkehrseinrichtungen wenigstens eine Verkehrseinrichtung ausgewählt aus der Gruppe umfassend Tankstellen, Autobahnmeistereien, Eisenbahnstellwerke, Verkehrsanzeigesysteme und Verkehrsleitsysteme oder beispielsweise Rundfunksender. Die Kommunikation mit diesen Verkehrseinrichtungen kann beispielsweise über ein Rechenzentrum des erfindungsgemäßen Systems gesteuert werden. Das Rechenzentrum kann ebenfalls die jeweiligen Anforderungen von Energiebedarf, Bedarf an Rechenkapazität oder an Wasserstoff mehrerer Anwender aufnehmen und in einem Notfall priorisieren, so dass die Energie zunächst an diejenigen Anwender abgegeben werden kann, bei denen der Bedarf am dringendsten ist. Hier ist es wiederum von Vorteil, wenn an verschiedenen Orten Rechenzentren vorgesehen sind, die untereinander kommunizieren und sich austauschen können, so dass man bei einem Notfall beispielsweise landesweit den Bedarf erfassen und eine priorisierte Energieabgabe veranlassen kann.

Gemäß einer bevorzugten Weiterbildung der vorliegenden Erfindung ist wenigstens eine Speichereinrichtung zur Speicherung der regenerativ erzeugten elektrischen Energie eingerichtet zur Abgabe im autarken Stromnetz regenerativ erzeugter Energie an wenigstens ein Pumpsystem, insbesondere an ein Pumpsystem für Wasser oder Kraftstoffe. Bei einem größeren Stromausfall hat es sich als problematisch erwiesen, dass Pumpeinrichtungen in Wasserwerken ebenfalls ausfallen, da sie elektrisch betrieben werden, so dass einige Zeit nach der Stromversorgung auch die Wasserversorgung ausfällt. Gleiches gilt für Pumpsysteme für Kraftstoff in Kraftstofflagern oder an Tankstellen. Hier kann ebenfalls regenerativ erzeugte Energie aus dem autarken Stromnetz geliefert werden, um die Wasserversorgung und die Versorgung mit Kraftstoff sicherzustellen.

Gemäß einer bevorzugten Weiterbildung der vorliegenden Erfindung umfasst das System wenigstens eine vom öffentlichen Stromnetz unabhängige Notstromtankstelle mit restriktiv geregeltem Zugang für systemrelevante Organisationen. Diese Variante der Erfindung dient dazu, eine Nutzung der regenerativ erzeugten elektrischen Energie aus dem autarken Stromnetz nach Eintritt eines Notfalls durch nicht autorisierte Verbraucher zu verhindern. Hierzu kann beispielsweise vorgesehen sein, dass die Abgabe von elektrischer Energie, Wasserstoff oder Kraftstoff an einer Notstromtankstelle, die beispielsweise in Form eines gegebenenfalls mobilen oder transportablen Energiecontainers gemäß der obigen Definition ausgebildet ist, nur durch eigens dazu autorisierte Abnehmer möglich ist. Dazu kann entweder eine elektronische Sicherung über Passwörter oder dergleichen vorgesehen sein, eine Sicherung über Hardware wie Chipkarten oder ähnliches oder eine Sicherung über spezifische mechanische Vorrichtungen, die der Nutzer benötigt, um elektrische Energie, Wasserstoff oder Kraftstoff aus einer der Abgabeeinrichtungen des Systems zu entnehmen. Eine noch höhere Sicherheit ergibt sich bei Kombination zweier oder mehrerer der genannten Sicherungsmaßnahmen.

Das erfindungsgemäße System umfasst dabei bevorzugt wenigstens eine Sicherungseinrichtung, die geeignet ist, zu prüfen, ob ein Verbraucher, der die Abgabe elektrischer Energie oder eines Mediums aus der Einrichtung oder eine Drohne anfordert, hierzu berechtigt ist. Erst nachdem die Berechtigung des entsprechenden Verbrauchers festgestellt wurde, erfolgt dann die Abgabe der elektrischen Energie oder des angeforderten Mediums an diesen Verbraucher.

Um diese Berechtigung zur Abgabe festzustellen, umfasst das erfindungsgemäße System vorzugsweise eine Steuereinheit, die ausgebildet ist, als Sicherungseinrichtung zu dienen oder mit einer gegebenenfalls separaten Sicherungseinrichtung zusammenwirkt und die Berechtigung eines Verbrauchers zur Abgabe elektrischer Energie oder eines Mediums aus der Einrichtung, insbesondere am Ort einer der "Energieinseln" des Systems, oder die Berechtigung zur Anforderung einer Drohne zu einem definierten Ort, zu prüfen. Nach positiver Feststellung dieser Berechtigung kann die Steuereinheit die erforderlichen Maßnahmen zur Abgabe der elektrischen Energie oder des Mediums oder die Entsendung der Drohne veranlassen.

Die Abgabe der elektrischen Energie oder des Mediums erfolgt über die jeweilige spezifische Abgabeeinrichtung für elektrische Energie oder dieses Medium, wobei die Abgabeeinrichtung beispielsweise in einem Grundzustand gesperrt sein kann und erst nach Freigabe durch die Sicherungseinrichtung in einen Aktivzustand schaltbar ist, in der sie für eine Entnahme von elektrischer Energie oder eines Mediums durch einen Verbraucher entsperrt ist.

Gemäß einer bevorzugten Weiterbildung der Erfindung umfasst das System vorzugsweise eine Kommunikationseinrichtung und/oder eine mit dieser zusammenwirkende Datenverarbeitungseinheit, die eingerichtet ist, verschlüsselte Signale zu decodieren, die Informationen für die Identifizierung eines Verbrauchers enthalten. Die Kommunikation über verschlüsselte Signale gewährleistet eine erhöhte Sicherheit und verhindert unautorisierte Eingriffe von außen in das System.

Gemäß einer bevorzugten Weiterbildung der Erfindung ist die Steuereinheit eingerichtet, nach Identifizierung und Feststellung der Berechtigung eines Verbrauchers die Abgabeeinrichtung für elektrische Energie oder das jeweilige Medium zu entsperren.

Die bevorzugte Vorgehensweise nach einer Anforderung sieht somit vor, dass zunächst über die Steuereinheit der anfordernde Verbraucher identifiziert wird, dessen Berechtigung zur Entnahme von elektrischer Energie oder eines Mediums oder zum Empfang von Daten aus der Einrichtung oder zur Speicherung von Daten in der Einrichtung oder zur Nutzung einer Drohne festgestellt wird und die entsprechende Abgabeeinrichtung für elektrische Energie oder das Medium oder der Datenanschluss, insbesondere nach durchlaufen eines entsprechenden Sicherheitsprotokolls, entsperrt wird.

Gemäß einer bevorzugten Weiterbildung der vorliegenden Erfindung ist wenigstens eine Drohne des Systems eingerichtet, als Aufklärungsflugobjekt zu dienen und durch Aufklärung gewonnene Daten an eine Einheit des Systems, insbesondere an eine Steuereinheit, eine Sicherungseinrichtung oder eine Kommunikationseinrichtung zu senden. Die Drohnen können somit gemäß dieser Variante der Erfindung nicht nur Objekte auf Anforderung eines Verbrauchers an einen vorgegebenen Standort transportieren, sondern Aufklärung betreiben, für zivile oder gegebenenfalls auch militärische Zwecke. Beispielsweise kann die Drohne bei einem Aufklärungsflug feststellen, ob eine Beschädigung eines Verkehrswegs, an einer wichtigen Versorgungsleitung beispielsweise für Strom, Daten, Gas, Wasser oder dergleichen vorliegt, die zum Beispiel durch ein Katastrophenereignis, Sabotage oder einen feindlichen Angriff entstanden ist. Die von der Drohne beispielsweise mit einer Kamera aufgenommenen Daten zu dieser Beschädigung können dann einer Steuereinheit des Systems übermittelt werden, die dann wiederum einen Auftrag zur Reparatur an ein entsprechendes Team erteilen kann.

Aufklärungsflüge einer Drohne können beispielsweise auch dazu dienen, eine drohende Katastrophensituation wie zum Beispiel ein außergewöhnliches Wetterereignis, Hochwasser, einen Bergsturz oder einen Verkehrsstau, einen feindlichen militärischen Angriff oder dergleichen frühzeitig zu erkennen und an eine Einheit des Systems zu melden, so dass geeignete Maßnahmen ergriffen werden können, um mögliche Schäden zu verhindern oder einzudämmen.

Gemäß einer bevorzugten Weiterbildung der Erfindung ist wenigstens eine Drohne des Systems eingerichtet, über ein Funksystem mit sich ändernden Frequenzen oder über eine Pre-Kartographierung gesteuert zu werden. Ein solches Funksystem mit sich ändernden Frequenzen (sogenanntes Frequenz-hopping) gewährleistet eine erhöhte Abhörsicherheit bei der Kommunikation und verhindert Eingriffe unbefugter Dritter in die Steuerung der Drohne.

Die zuvor erwähnte "Pre-Kartographierung" liefert ein besonderes Maß an Sicherheit, da sie eine Kommunikation der Steuereinheit, der Sicherungseinrichtung, der Kommunikationseinrichtung oder anderer Komponenten des Systems mit der Drohne bzw. die Steuerung der Drohne selbst ermöglicht, ohne dass eine Kommunikation über ein Satelliten-System (GPS) erforderlich ist. Es erübrigt sich somit die Nutzung von Satelliten, die gegebenenfalls von Dritteinrichtung zur Verfügung gestellt werden müssten, die nicht Teil des Systems sind. Man kann hierbei zum Beispiel in den elektronischen Speicher-Komponenten der Drohne vorab eine Art Landkarte sämtlicher denkbarer Ziele, die von der Drohne angeflogen werden könnten, einprogrammieren. Wenn nun im Fall einer Anforderung der Drohne der Befehl erteilt werden soll, einen definierten Zielort anzufliegen, dann genügt es, der Drohne gegebenenfalls codierte Daten zu übermitteln, die dem bereits einprogrammierten Zielort entsprechen. Diese Daten können beispielsweise eine Abfolge von Zeichen (Zahlen, Buchstaben, Sonderzeichen) umfassen, die der Steuerung der Drohne aufgrund der Pre-Kartographierung den Zielort definiert, wobei diese Abfolge von Zeichen jedoch für Dritte außerhalb des Systems völlig bedeutungslos ist, so dass der der Drohne mitgeteilte Zielort für Außenstehende, selbst bei Abfangen von Kommunikationssignalen, nicht erschlossen werden kann.

Das erfindungsgemäße System bietet somit viele Vorteile und ist insbesondere in Notfallsituationen für Verbraucher geeignet, die ausgewählt sind aus der Gruppe umfassend systemrelevante Einrichtungen, insbesondere Einrichtungen des Gesundheitswesens, des Militärs, der Polizei, der Feuerwehr, des Zivilschutzes, eines technischen Hilfswerks oder des Katastrophenschutzes. Weiterhin ist es vorteilhaft, wenn Verkehrseinrichtungen aus dem Bereich des Straßenverkehrs oder Schienenverkehrs in das erfindungsgemäße System einbezogen werden, insbesondere solche ausgewählt aus der Gruppe umfassend Tankstellen, Autobahnmeistereien, Eisenbahnstellwerke, Verkehrsanzeigesysteme, Verkehrsleitsysteme und Rundfunksender. Derartige Verkehrseinrichtungen können beispielsweise mit einer Steuereinheit, einer Sicherungseinrichtung, einer Kommunikationseinrichtung oder einer Drohne des Systems kommunizieren und interagieren. Auf diese Weise können beispielsweise bereits vorhandene Verkehrseinrichtungen bei Operationen im Rahmen des Systems genutzt werden.

Nachfolgend wird die vorliegende Erfindung anhand von Ausführungsbeispielen unter Bezugnahme auf die beiliegende Zeichnung näher beschrieben. Dabei zeigt:
Figur 1 eine schematische Darstellung eines beispielhaften erfindungsgemäßen Systems zur Erzeugung, Abgabe und Speicherung elektrischer Energie;
Figur 2 eine weitere schematische Darstellung eines beispielhaften alternativen Systems gemäß einer Variante der Erfindung.

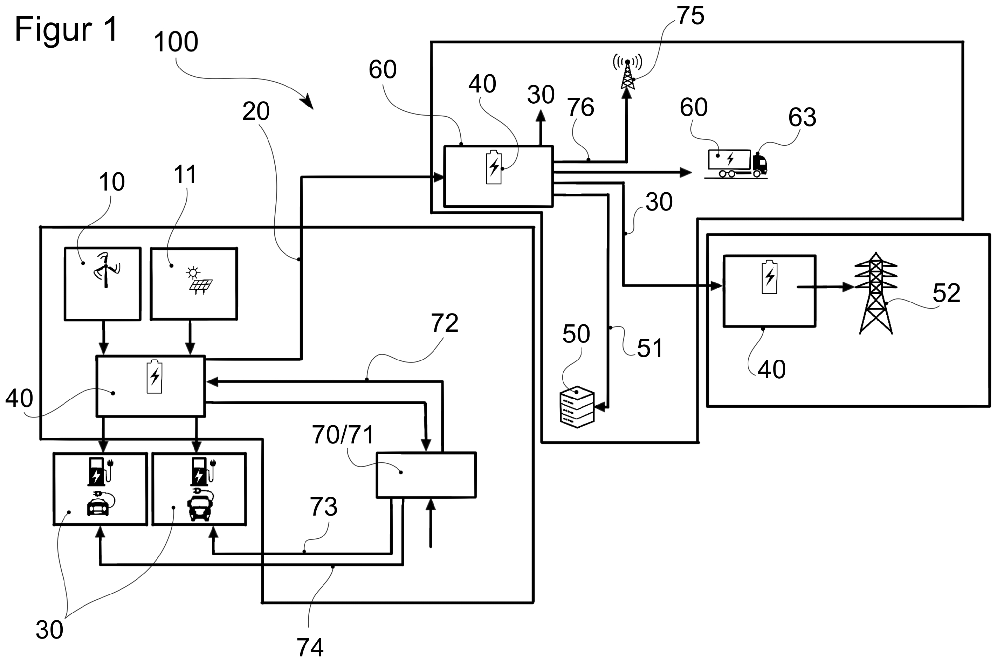

Es wird nachfolgend auf die schematische Darstellung eines erfindungsgemäßen Systems gemäß Figur 1 Bezug genommen. Das erfindungsgemäße System 100 umfasst wenigstens eine erste Erzeugungseinrichtung 10 für die Erzeugung regenerativer elektrischer Energie, beispielsweise eine Windkraftanlage. Das System umfasst vorzugsweise wenigstens eine zweite Erzeugungseinrichtung 11 für die Erzeugung regenerativer elektrischer Energie in Form einer Photovoltaikanlage. Vorzugsweise sind eine Vielzahl solcher Erzeugungseinrichtungen 10, 11 für die Erzeugung regenerativer elektrischer Energie vorgesehen, die jeweils Strom erzeugen und diesen in geeigneter Form hinsichtlich Frequenz und Spannung als Wechselstrom oder auch als Gleichstrom in ein autarkes Stromnetz 20 einspeisen. Die regenerativ erzeugte elektrische Energie kann von diesen Erzeugern 10, 11 auch unmittelbar in eine erste Speichereinrichtung 40, beispielsweise eine oder mehrere Batterien oder Akkumulatoren eingespeist werden, insbesondere, wenn zunächst zu dem Zeitpunkt der Erzeugung keine ausreichende Abnahme der Energie in dem autarken Stromnetz 20 vorgesehen ist.

Über Leitungen des autarken Stromnetzes 20 kann der regenerativ erzeugte Strom einem vorzugsweise mobilen oder transportablen Energiecontainer 60 zugeführt werden, welcher über weitere Speichereinrichtungen 40 für elektrische Energei verfügt sowie auch gegebenenfalls über Abgabeeinrichtungen 30, die hier nicht im Detail dargestellt sind und die eine Abgabe der regenerativ erzeugten elektrischen Energie an Verbraucher ermöglicht, die in einem Notfall wie beispielsweise einem Ausfall des öffentliche Stromnetzes elektrische Energie benötigen. Wenn der Energiecontainer 60 transportabel ist, kann dieser auf ein Fahrzeug 63 aufgeladen und von diesem an einen gewünschten Ort transportiert werden, wo er für einen Abnehmer als Notstromspeicher dient. Derartige Notstromspeicher/Energiecontainer 60 können beispielsweise an Einrichtungen des Militärs oder Zivilschutzes, an Rettungskräfte, Polizei, Krankenhäuser oder andere systemrelevante Einrichtungen geliefert werden.

Die vorzugsweise mobilen/transportablen Energiecontainer 60 können als modulartige Baueinheiten in beispielsweise genormter Größe ausgebildet sein und sie können eingerichtet sein für eine Verbindung mit weiteren mobilen/transportablen Energiecontainern 60, so dass den jeweiligen Verbrauchern ohne größeren Aufwand und in sehr kurzer Zeit die jeweils benötigte Menge an elektrischer Energie zur Verfügung gestellt werden kann.

Das erfindungsgemäße System 100 gemäß der beispielhaften Variante von Figur 1 umfasst weiterhin wenigstens ein vom öffentlichen Netz unabhängiges, dezentrales Rechenzentrum 50, welches ebenfalls mittels dem autarken Stromnetz 20 entnommener, regenerativ erzeugter elektrischer Energie versorgt wird. Dieses dezentrale Rechenzentrum 50 kann auch gegebenenfalls in einem mobilen/transportablen Energiecontainer 60 untergebracht sein oder es ist in räumlicher Nähe zu diesem angeordnet und entsprechend mit dem Energiecontainer über Stromleitungen 51 und in der Regel auch über Datenleitungen verbunden, die hier nur schematisch vereinfacht dargestellt sind. Über dieses oder weitere dezentrale Rechenzentren oder über eine Steuerung können beispielsweise Berechnungen angestellt werden, welche Energiemenge im System 100 zur Verfügung steht oder welche Energiemenge mit welcher Priorität an welche Verbraucher über die Energiecontainer 60 und andere Abgabeeinrichtungen 30 abgegeben wird. Außerdem kann das dezentrale Rechenzentrum Rechenkapazität und gegebenenfalls Speicherkapazität den Verbrauchern zur Verfügung stellen.

Das erfindungsgemäße System 100 umfasst weiterhin Funkeinrichtungen 75 für eine sichere dezentrale Kommunikation, die von allen Einrichtungen in sensiblen Bereichen wie beispielsweise dem Militär, Polizei, Feuerwehr, technischen Hilfswerken, medizinischen Hilfsorganisationen und dergleichen genutzt werden können. Diese Funkeinrichtungen 75 erhalten ebenfalls regenerativ erzeugte elektrische Energie über eine Stromleitung 76 aus dem autarken Stromnetz 20 beispielsweise aus einem der Energiecontainer 60 oder aus einer der Speichereinrichtungen 40.

Weiterhin kann gegebenenfalls Energie aus dem autarken Stromnetz 20 an weitere Speichereinrichtungen 40 abgegeben werden, aus denen auch bei Bedarf temporär eine Abgabe der regenerativen elektrischen Energie aus dem autarken Stromnetz 20 an ein externes Stromnetz 52 möglich ist. Die Abgabe an das externe Stromnetz 52 ist in diesem Fall über geeignete Sicherheitseinrichtungen streng gesichert, so dass vermieden wird, dass das autarke Stromnetz über eine solche Schnittstelle über das externe Stromnetz zugänglich ist. Die Verbindung mit einem externen Stromnetz 52 erfolgt daher nur über einen begrenzten Zeitraum, das heißt es besteht keine dauerhafte Verbindung zu dem externen Stromnetz 52.

Wie sich aus der Darstellung gemäß Figur 1 ergibt, umfasst das erfindungsgemäße System 100 weitere Speicherungseinrichtungen 40, die auch stationär angeordnet sein können oder ebenfalls transportabel sind und die beispielsweise auf Parkplätzen, an Raststätten, an öffentlichen Plätzen und dergleichen aufgestellt werden können und mit entsprechenden Abgabeeinrichtungen 30 (Ladestationen) für die Abgabe elektrischer Energie an Landfahrzeuge, das heißt PKWs oder LKWs in jeweils geeigneter Form eingerichtet sind. Diese Abgabeeinrichtungen 30 können auch als sogenannte "Multi-Use-Einheiten" ausgebildet sein und weiterhin beispielsweise für die Abgabe von Wasserstoff eingerichtet sein. Dieser Wasserstoff wird vorzugsweise ebenfalls mittels regenerativ erzeugter elektrischer Energie des Systems in einer Erzeugungseinrichtung 70 zur Erzeugung von Wasserstoff elektrolytisch aus Wasser hergestellt und kann in einer Speichereinheit 71 zur Speicherung von Wasserstoff gespeichert werden. Bei Bedarf kann dieser Wasserstoff beispielsweise über eine Brennstoffzelle wieder in elektrische Energie umgewandelt und über die Leitung 72 kann diese elektrische Energie einem Batteriespeicher 40 zugeführt werden. Der Wasserstoff kann außerdem über die Wasserstoffleitungen 73, 74 zu einer der Abgabeeinrichtungen 30 geleitet werden, so dass dort auch Wasserstoff abgegeben/getankt werden kann, beispielsweise auch getrennt an Abgabeeinrichtungen 30 für PKWs und LKWs.

In den Speichereinrichtungen 40 oder den Energiecontainern 60 gespeicherte regenerativ erzeugte elektrische Energie kann auch beispielsweise im Bereich von Parkplätzen, Autobahnraststätten, öffentlichen Plätzen, Bahnhöfen oder dergleichen an ausgewählte lokale Verbraucher, die keine Fahrzeuge sind, abgegeben werden, zum Beispiel an Wohngebäude oder Indutriegebäude, die dort angesiedelt sind. Letzteres bietet sich insbesondere in abgelegenen Gegenden an, wenn dort kein öffentliches Stromnetz vorhanden ist oder aber beispielsweise in Katastrophenfällen oder im Kriegsfall, wenn dort Bunker oder Gebäude vorhanden sind, in denen Menschen temporär sicher untergebracht werden, so dass diese Einrichtungen mit regenerativ erzeugter Energie aus dem autarken Stromnetz versorgt werden können.

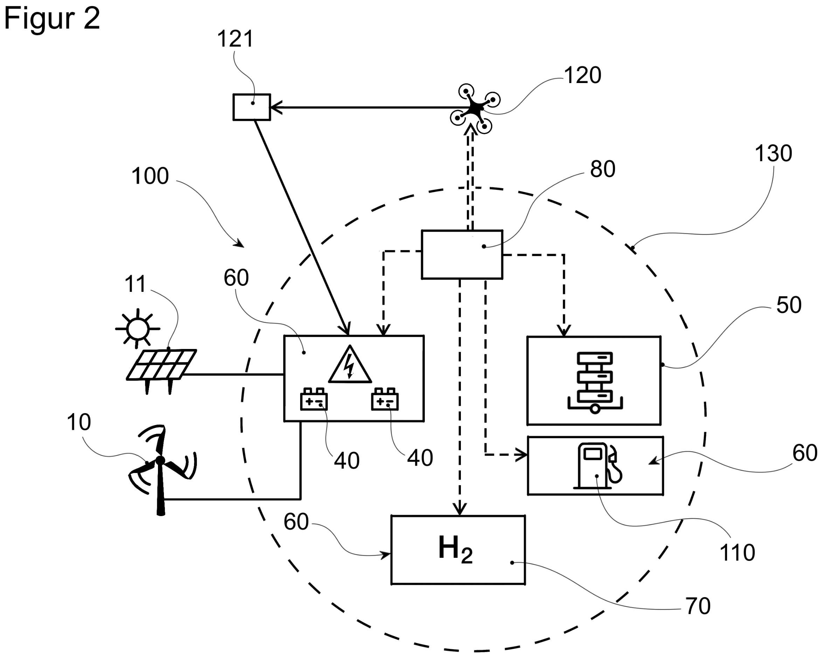

Nachfolgend wird unter Bezugnahme auf die Figur 2 ein alternatives Ausführungsbeispiel eines erfindungsgemäßen Systems 100 näher erläutert. Bei dieser beispielhaften Variante des Systems sind ähnliche Baueinheiten vorhanden, wie sie bereits zuvor unter Bezugnahme auf die Figur 1 beschrieben wurden. Das System 100 umfasst wenigstens eine Windkraftanlage 10 sowie wenigstens eine Photovoltaikanlage 11 zur Erzeugung regenerativer elektrischer Energie. Diese elektrische Energie wird in ein autarkes Stromnetz eingespeist und in Speichereinrichtungen 40 wie Akkumulatoren oder Batterien gespeichert, die sich beispielsweise in dafür vorgesehenen Energiecontainern 60 befinden können.

Weiterhin kann das System 100 Erzeugungseinrichtungen 70 zur Erzeugung von Wasserstoff umfassen, in denen entweder mittels regenerativer elektrischer Energie oder mittels anderer Methoden Wasserstoff erzeugt und/oder gespeichert werden kann. Die Erzeugung und/oder Speicherung von Wasserstoff kann ebenfalls in Energiecontainern 60 erfolgen.

Weiterhin kann das System 100 wenigstens einen oder mehrere zusätzliche Energiecontainer 60 umfassen, in denen ein weiteres energiehaltiges Medium wie beispielsweise Methanol, Methan, Propangas, Butangas, Ammoniak, Benzin, Kerosin, Diesel oder ein anderer Kraftstoff gespeichert ist, so dass eine Art Tankstelle 110 für eines oder mehrere verschiedene energiehaltige Medien bereitgestellt wird, die an Verbraucher abgegeben werden können. Diese Tankstelle 110 kann entweder stationär sein oder auch in Form eines mobilen oder transportablen Energiecontainers 60 ausgebildet sein.

Weiterhin kann das System 100 wenigstens ein Rechenzentrum 50 umfassen, welches geeignet ist, Verbrauchern in Notfallsituationen Rechenleistung zur Verfügung zu stellen und darüber hinaus Verbrauchern auch Speicherkapazität für Daten zur Verfügung stellen kann. Die Steuerung 80 für die Abgabe von regenerativer elektrischer Energie oder energiehaltiger Medien an Verbraucher kann auch Teil des Rechenzentrums 50 sein. Das Rechenzentrum 50 kann auch beispielsweise in einem mobilen oder transportablen Container oder aber aus Sicherheitsgründen auch stationär untergebracht sein.

In dem Ausführungsbeispiel von Figur 2 ist die Steuerung 80 von dem Rechenzentrum 50 separat untergebracht, beispielsweise in einem eigenen Container, aber ebenso ist die Unterbringung der Steuerung 80, des Rechenzentrums 50 und der Speichereinrichtungen 40 für elektrische Energie und gegebenenfalls auch Erzeugungseinrichtungen 70 und/oder Speichereinrichtungen für Wasserstoff auch in einem gemeinsamen Container 60 möglich.

In dem Ausführungsbeispiel gemäß Figur 2 sind die zuvor beschriebenen Komponenten, die Speichereinrichtungen 40 für elektrische Energie, die Erzeugungseinrichtung 70 für Wasserstoff, das Rechenzentrum 50, der Energiecontainer 60, der als Trankstelle 110 für energiehaltige Medien dient und die Steuerung 80 des Systems 100 an einer sogenannten "Energieinsel" 130 bevorzugt in räumlicher Nähe zueinander angeordnet, so dass Verbrauchern, die Energie, Wasserstoff, ein energiehaltiges Medium oder Rechnerleistung anfordern, alle genannten Funktionen im Bereich einer solchen Energieinsel zur Verfügung stehen. Eine "Energieinsel" im Sinne der vorliegenden Erfindung kann somit als ein Ort angesehen werden, an dem mehrere zusammenwirkende Elemente des Systems der zuvor beschriebenen Art angeordnet sind, vorzugsweise in räumlicher Nähe zueinander. Eine solche Energieinsel kann beispielsweise an einem Parkplatz, Rastplatz oder öffentlichen Platz oder einem Bahnhof oder Flughafen angeordnet sein, welcher von Fahrzeugen gut angefahren werden kann. Die Windkraftanlagen 10 und Photovoltaikanlagen 11 müssen nicht an der Energieinsel angeordnet sein, wobei es sich allerdings empfiehlt, dass diese sich in einer nicht allzu großen Entfernung von beispielsweise einigen hundert Meter bis zu einigen km befinden, bevorzugt bis zu etwa 10 km entfernt von einer Energieinsel 130, um zu große Leitungswege innerhalb des autarken Stromnetzes des erfindungsgemäßen Systems 100 zu vermeiden.

Nachfolgend wird unter Bezugnahme auf Figur 2 die Funktion einer in das erfindungsgemäße System integrierten Drohne 120 erläutert. Über die Steuerung 80 einer Energieinsel oder alternativ auch über eine eigene Drohnensteuerung, die in Figur 2 nicht dargestellt ist, wird eine Drohne 120 angefordert, wenn entweder ein Gegenstand 121 innerhalb des Systems zu transportieren ist oder wenn eine Drohne für einen Aufklärungsflug eingesetzt werden soll. Das Signal zur Anforderung der Drohne 120 kann beispielsweise über Funk, Satellitenkommunikation oder dergleichen an die Drohne oder eine Drohnensteuerung übermittelt werden. Dabei kann zum Beispiel eine Pre-Kartographierung genutzt werden, bei der geodätische Daten bereits in der Drohne 120 hinterlegt sind, so dass dieser lediglich ein Zeichencode übermittelt werden muss, der für Außenstehende eine nicht verwertbare und nicht entschlüsselbare Information enthält. Die Drohne fliegt dann zu den entsprechenden Geokoordinaten, an denen sich beispielsweise ein von einer Energieinsel angeforderter Gegenstand 121 befindet und holt diesen ab. Sie fliegt dann mit dem Gegenstand 121 zu einem vorbestimmten Ort, beispielsweise zu einer Energieinsel 130, an der sich Energiecontainer 60, Speichereinrichtungen 40 zur Speicherung elektrischer Energie und gegebenenfalls weitere Einrichtungen des Systems 100 befinden, wie dies in Figur 2 dargestellt ist.

Der Gegenstand 121 kann selbstverständlich auch zu einem beliebigen anderen Ort geflogen werden, beispielsweise einem Ort, an dem sich zuvor ein Notfall ereignet hat und daher der Gegenstand 121 wie zum Beispiel eine Blutkonserve, ein Medikament, ein menschliches Organ dringend benötigt wird. Die entsprechende Anforderung des Gegenstands 121 kann von einem dazu berechtigten Verbraucher somit im Prinzip an jedem beliebigen Ort erfolgen. Bevorzugt erfolgt jedoch die Abwicklung über eine Energieinsel 130, an der derartige Gegenstände bereitgehalten werden können und an der auch Drohnen verfügbar sein können, um so die Abwicklung eines Vorgangs nach der Anforderung eines Gegenstands zu rasch wie möglich durchführen zu können. Die Bevorratung von Gegenständen für Notfallsituationen im Bereich einer Energieinsel hat den Vorteil, dass nur ein Flugweg erforderlich ist, bei dem die Drohne 120 mit dem Gegenstand von der Energieinsel 130 zu dem Ort der Anforderung fliegt. Ebenso gut ist es aber auch möglich, dass die Drohne 120 einen an der Energieinsel 130 nicht vorhandenen Gegenstand 121 zunächst beschafft und diesen Gegenstand 121 dann direkt zu einem Ort bringt, an dem die Anforderung erfolgt, wenn beispielsweise dort ein Unfall, eine Naturkatastrophe oder ein feindlicher Angriff erfolgt ist. In diesem Fall sind von der Drohne 120 zwei Flugwege erforderlich. In beiden Fällen ist es von Vorteil, wenn das System über möglichst viele Drohnen 120 verfügt, die an unterschiedlichen Orten stationiert sind, um die Wege so kurz wie möglich zu halten und wenn die in Notfallsituationen notwendigen Gegenstände 121 entweder an den Energieinseln 130 oder an Depots, an vielen überregional verteilt angeordneten Orten, bevorratet werden. Die Anforderung der Gegenstände 120, die Prüfung der Berechtigung der anfordernden Verbraucher und die Koordinierung der Abhol- und Zustellorte für die angeforderten Gegenstände 120 kann über die in Figur 2 dargestellte Steuerung 80 abgewickelt werden.

### Bezugszeichenliste

- 10: Erzeugungseinrichtung für regenerative elektrische Energie
- 11: Erzeugungseinrichtung für regenerative elektrische Energie
- 20: autarkes Stromnetz
- 30: Abgabeeinrichtung zur Abgabe regenerativ erzeugter elektrischer Energie
- 40: Speichereinrichtung zur Speicherung regenerativ erzeugter elektrischer Energie
- 50: dezentrales Rechenzentrum
- 51: Stromleitung/Kommunikationsleitung/Datenleitung
- 52: externes Stromnetz
- 60: mobiler/transportabler Energiecontainer
- 63: Fahrzeug
- 70: Erzeugungseinrichtung zur Erzeugung von Wasserstoff
- 71: Speichereinheit zur Speicherung von Wasserstoff
- 72: Leitung zum Batteriespeicher
- 73: Wasserstoffleitung zur Abgabeeinrichtung
- 74: Wasserstoffleitung zur Abgabeeinrichtung
- 75: Mobilfunkeinrichtung
- 76: Stromleitung
- 80: Steuerung
- 100: System
- 110: Tankstelle für energiehaltiges Medium
- 120: Drohne
- 121: Gegenstand
- 130: Energieinsel

## Patentansprüche

1. System (100) zur Versorgung von Verbrauchern mit elektrischer Energie sowie gegebenenfalls weiteren Medien umfassend:
- wenigstens eine Erzeugungseinrichtung (10, 11) zur Erzeugung regenerativer elektrischer Energie,
- ein vom öffentlichen Netz autarkes Stromnetz (20), in welches diese regenerativ erzeugte Energie eingespeist wird,
- wenigstens eine Speichereinrichtung (40) zur Speicherung eingespeister regenerativ erzeugter elektrischer Energie,
- wenigstens eine Abgabeeinrichtung (30) zur Abgabe der regenerativ erzeugten elektrischen Energie aus der Einrichtung an einen externen Verbraucher,
- wenigstens eine Kommunikationseinrichtung (75) zur drahtlosen Kommunikation, geeignet zum Empfangen und/ oder Senden von Signalen,
- wenigstens eine Steuereinheit (80), die mit der Kommunikationseinrichtung (75) zusammenwirkt, wobei die Steuereinheit (80) geeignet ist, bei Anforderung von elektrischer Energie durch einen Verbraucher auf die Abgabeeinrichtung (30) und/oder die Speichereinrichtung (40) einzuwirken, um eine Abgabe von elektrischer Energie an den Verbraucher zu veranlassen,
- wobei das System (100) weiterhin wenigstens eine Drohne (120) umfasst, geeignet, auf Anforderung eines Verbrauchers hin mindestens ein von diesem Verbraucher benötigtes Objekt (121) zu einem vorgegebenen Standort zu transportieren.

2. System (100) nach Anspruch 1, wobei wenigstens eine Drohne eingerichtet ist, mit wenigstens einer Kommunikationseinrichtung (75) und/oder wenigstens einer Steuereinheit (80) des Systems zu kommunizieren.

3. System (100) nach Anspruch 1 oder 2, wobei dieses wenigstens eine Empfangseinrichtung und/oder Sendeeinrichtung insbesondere wenigstens eine Antenne umfasst, die der Kommunikationseinrichtung (75) zugeordnet ist oder mit der Kommunikationseinrichtung (75) in Verbindung steht.

4. System (100) nach einem der Ansprüche 1 bis 3, weiterhin umfassend wenigstens eine Sicherungseinrichtung, geeignet zu prüfen, ob ein Verbraucher, der die Abgabe elektrischer Energie oder eines Mediums aus der Einrichtung (1) oder eine Drohne anfordert, hierzu berechtigt ist.

5. System (100) nach einem der Anspruch 4, wobei die Steuereinheit (80) ausgebildet ist, als Sicherungseinrichtung zu dienen und die Berechtigung eines Verbrauchers zur Abgabe elektrischer Energie oder eines Mediums aus einer Einrichtung (50, 60, 70, 110) oder zur Anforderung einer Drohne (120) zu prüfen.

6. System (100) nach einem der Ansprüche 4 oder 5, wobei die Abgabeeinrichtung (30) für elektrische Energie oder ein Medium im Grundzustand gesperrt ist und erst nach Freigabe durch die Sicherungseinrichtung in einen Aktivzustand schaltbar ist, in der sie für eine Entnahme von elektrischer Energie oder eines Mediums durch einen Verbraucher entsperrt ist.

7. System (100) nach einem der Ansprüche 2 bis 6, wobei die Kommunikationseinrichtung (75) und/oder eine mit dieser zusammenwirkende Datenverarbeitungseinheit (50) eingerichtet ist, verschlüsselte Signale zu decodieren, die Informationen für die Identifizierung eines Verbrauchers enthalten.

8. System (100) nach einem der Ansprüche 4 bis 7, wobei die Steuereinheit (80) eingerichtet ist, nach Identifizierung und Feststellung der Berechtigung eines Verbrauchers die Abgabeeinrichtung (30) zu entsperren.

9. System (100) nach einem der Ansprüche 1 bis 8, weiterhin umfassend wenigstens eine Erzeugungseinrichtung (70) für Wasserstoff und/oder wenigstens eine Speichereinheit (71) für Wasserstoff und wenigstens eine Abgabeeinrichtung für Wasserstoff an einen Verbraucher.

10. System (100) nach einem der Ansprüche 1 bis 9, weiterhin umfassend wenigstens eine Speichereinheit (60) für Wasser, Gas oder Kraftstoff und wenigstens eine Abgabeeinrichtung (110) für Wasser, Gas oder Kraftstoff an einen Verbraucher.

11. System (100) nach einem der Ansprüche 1 bis 10, weiterhin umfassend wenigstens eine Datenverarbeitungseinheit (50) und/oder einen Datenspeicher und wenigstens einen Datenanschluss, eingerichtet für den Anschluss eines Geräts zur Dateneingabe in die Datenverarbeitungseinheit (50) oder Datenentnahme aus der Datenverarbeitungseinheit (50).

12. System (100) nach einem der Ansprüche 1 bis 11, wobei die Steuereinheit (80) eingerichtet ist, einen Verbraucher zu identifizieren, dessen Berechtigung zur Entnahme von elektrischer Energie oder eines Mediums oder zum Empfang von Daten aus der Einrichtung oder zur Speicherung von Daten in der Einrichtung festzustellen und die entsprechende Abgabeeinrichtung (110) für elektrische Energie oder das Medium oder den Datenanschluss, insbesondere nach durchlaufen eines entsprechenden Sicherheitsprotokolls zu entsperren.

13. System (100) nach einem der vorhergehenden Ansprüche, wobei wenigstens eine Drohne (120) eingerichtet ist, als Aufklärungsflugobjekt zu dienen und durch Aufklärung gewonnene Daten an eine Einheit des Systems (100), insbesondere an eine Steuereinheit (80), eine Sicherungseinrichtung oder eine Kommunikationseinrichtung (75) zu senden.

14. System (100) nach einem der vorhergehenden Ansprüche, wobei wenigstens eine Drohne (120) eingerichtet ist, über ein Funksystem mit sich ändernden Frequenzen oder über eine Pre-Kartographierung gesteuert zu werden.

15. System (100) nach einem der vorhergehenden Ansprüche, wobei wenigstens ein Verbraucher ausgewählt ist aus der Gruppe umfassend systemrelevante Einrichtungen, insbesondere Einrichtungen des Gesundheitswesens, des Militärs, der Polizei, der Feuerwehr, des Zivilschutzes, eines technischen Hilfswerks oder des Katastrophenschutzes.
